# FASCICULE DE BREVET EUROPEEN

(11) **EP 0 963 865 B1**
(45) Date de publication et mention de la délivrance du brevet: **07.08.2002**
(21) Numéro de dépôt: 99401393.6
(22) Date de dépôt: 10.06.1999
(51) Int. Cl.: B60G 7/00, B22C 9/22

(54) **Procédé de réalisation d'un triangle de suspension métallique, triangle obtenu par le procédé et moule de mise en oeuvre de procédé**
Verfahren und Form zur Herstellung von einem metallischem Dreieckslenker für eine Aufhängung und durch das Verfahren hergestellter Dreieckslenker
Manufacturing method of a metallic suspension triangle, triangle obtained by this method and mold for this method

(30) Priorité: 10.06.1998 FR 9807283
(43) Date de publication de la demande: 15.12.1999
(73) Titulaire: AUTOMOBILES PEUGEOT, 75116 Paris (FR); AUTOMOBILES CITROEN, 92200 Neuilly-sur-Seine (FR)
(72) Inventeur: Tiprez, Philippe, 91800 Brunoy (FR)
(74) Mandataire: Gendraud, Pierre

(56) Documents cités:
- DE-C- 4 300 642
- US-A- 3 215 384
- US-A- 3 408 124
- US-A- 4 046 402
- US-A- 4 059 286
- PATENT ABSTRACTS OF JAPAN vol. 008, no. 073 (M-287), 5 avril 1984 (1984-04-05) & JP 58 218407 A (HIRUTA KOGYO KK), 19 décembre 1983 (1983-12-19)
- PATENT ABSTRACTS OF JAPAN vol. 015, no. 077 (M-1085), 22 février 1991 (1991-02-22) & JP 02 299744 A (FUJI HEAVY IND LTD;OTHERS: 01), 12 décembre 1990 (1990-12-12)
- PATENT ABSTRACTS OF JAPAN vol. 097, no. 003, 31 mars 1997 (1997-03-31) & JP 08 312636 A (HITACHI METALS LTD), 26 novembre 1996 (1996-11-26)

## Description

L'invention se rapporte à un procédé de réalisation d'un triangle de suspension métallique, à un triangle obtenu par le procédé ainsi qu'à un moule de mise en oeuvre du procédé.

L'invention concerne plus particulièrement la réalisation d'un triangle de suspension comportant au moins un logement dans lequel est emmanchée ou clipée une articulation élastique. Un tel triangle de suspension est utilisé dans certains véhicules automobiles.

Pour réaliser un triangle de suspension métallique pourvu d'au moins un logement d'articulation, il est connu de mouler un triangle dit "brut" puis d'usiner ce dernier. L'usinage du triangle brut peut consister à aléser un boîtier de rotule dans le triangle ainsi que l'intérieur des logements pour articulations qui sont préformés lors de l'opération de moulage. Les logements pour articulations sont alésés avec une forme cylindrique et un chanfrein est réalisé à l'une des extrémités de ces logements, pour faciliter le montage des articulations.

Ces multiples étapes d'usinage du triangle brut rendent la fabrication d'un tel triangle de suspension longue et coûteuse.

Un but de la présente invention est de proposer un procédé de réalisation d'un triangle de suspension métallique pourvu d'au moins un logement d'articulation élastique, palliant tout ou partie des inconvénients de l'art antérieur relevés ci-dessus.

Ce but est atteint par le fait que le procédé de réalisation d'un triangle de suspension métallique pourvu d'au moins un logement d'articulation élastique emmanchée ou clipée, comporte une étape de moulage d'un triangle dit brut, lors de l'étape de moulage, le plan de joint du moule du triangle qui est situé à l'intérieur du ou des logements d'articulation est disposé sensiblement à une des extrémités du logement, de façon à former une bavure ou bourrelet au niveau de l'extrémité du logement qui est apte à coopérer par clipage avec l'articulation élastique.

Selon une autre particularité le logement d'articulation est moulé avec un angle de dépouille compris entre 1 et 10 degrés, pour constituer un logement sensiblement tronconique.

Selon une autre particularité le logement d'articulation présente un angle de dépouille compris entre 3 et 5 degrés.

Un autre but de l'invention est de proposer un triangle de suspension obtenu par le procédé.

Ce but est atteint par le fait que dans le triangle de suspension obtenu par le procédé, la surface délimitant le ou les logements d'articulations comporte un bourrelet sensiblement circulaire et situé au niveau de l'une des extrémités du logement, le bourrelet étant apte à coopérer par clipage avec des moyens de clipage complémentaires formés sur la périphérie d'une articulation élastique.

Selon une autre particularité le ou les logements d'articulation sont sensiblement tronconiques, le bourrelet de clipage étant situé au niveau de l'extrémité du tronc de cône ayant le diamètre le plus faible.

Selon une autre particularité le triangle est constitué d'aluminium.

Un autre but de l'invention est de proposer un moule de mise en oeuvre du procédé.

Ce but est atteint par le fait que le moule de mise en oeuvre du procédé est constitué de deux pièces superposables pourvues chacune d'une empreinte de façon à délimiter le volume d'un triangle de suspension, l'empreinte de l'une des pièces constituant le moule comportant au moins une saillie destinée à former un logement pour une articulation, le plan de joint de la saillie avec l'autre partie du moule étant situé au niveau de l'une des extrémités du logement pour l'articulation.

Selon une autre particularité la saillie destinée à délimiter un logement pour l'articulation est sensiblement tronconique.

D'autres caractéristiques et avantages de l'invention apparaîtront à la lecture de la description détaillée qui va suivre, pour la compréhension de laquelle on se reportera aux dessins annexés, dans lesquels :
- la figure 1 représente une vue en coupe d'une opération de moulage d'un triangle de suspension selon l'invention,
- la figure 2 représente une section au niveau d'un logement d'articulation d'un triangle de suspension selon l'invention,
- la figure 3 représente une section d'un triangle de suspension selon l'invention au niveau d'un logement dans lequel est clipée une articulation élastique.

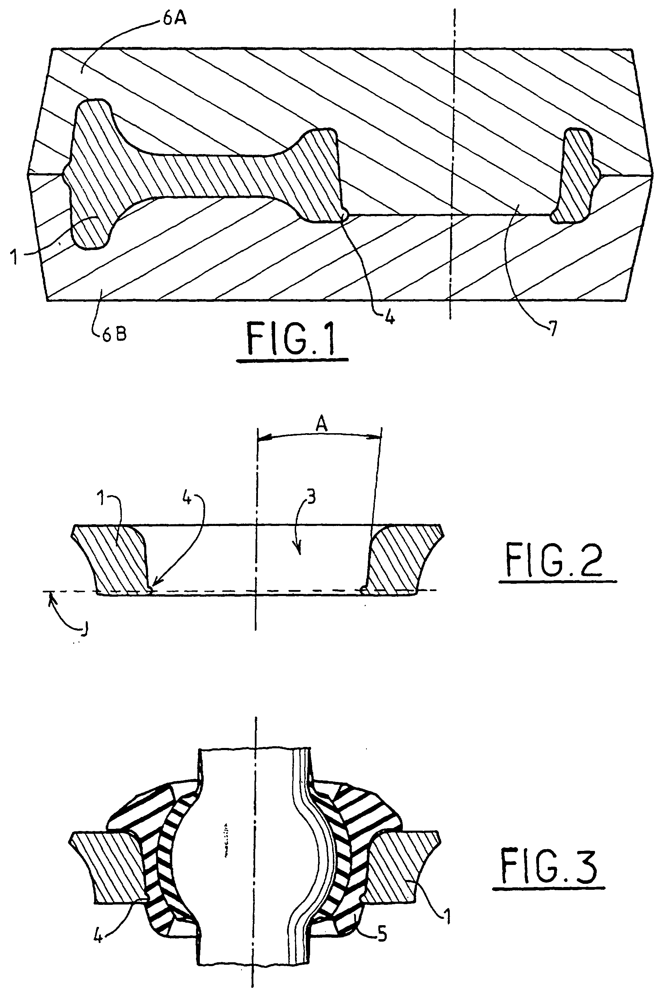

L'invention va à présent être décrite en référence aux figures 1 à 3.

L'invention concerne un procédé de réalisation d'un triangle 1 de suspension métallique pourvu d'au moins un logement 3 pour une articulation 5 élastique emmanchée ou clipée. De manière classique, la réalisation du triangle 1 de suspension comporte une étape de moulage d'un triangle dit "brut" suivie d'une étape d'usinage de ce triangle brut.

Selon l'invention, l'étape de moulage est effectuée de façon que le plan de joint J du moule du triangle 1 qui est situé à l'intérieur du logement 3 d'articulation est placé sensiblement à une des extrémités du logement 3 d'articulation (figure 2).

Cette disposition du plan de joint J à une des extrémités du logement 3 a pour effet que la bavure résultant du moulage forme un bourrelet 4 à une des extrémités du logement 3 d'articulation. Ce bourrelet est utilisé selon l'invention pour coopérer par clipage avec l'articulation 5 élastique disposée dans le logement 3 (figures 2 et 3). C'est-à-dire que la surface délimitant le logement 3 de chaque articulation peut être utilisée "brut", en ne nécessitant que peu ou pas d'usinage.

Ainsi, selon l'invention on déplace localement le plan de joint J du moule du triangle 1 de suspension. En effet, dans les procédés de fabrication de triangles de l'art antérieur, le plan de joint du moule est situé sensiblement au milieu du logement 3 de l'articulation. Dans ces procédés connus, la bavure correspondante est supprimée lors de l'usinage de la surface intérieure du logement 3 d'articulation.

La figure 1 représente en coupe le moulage d'un triangle de suspension selon l'invention.

Dans l'exemple de réalisation non limitatif de la figure 1, le moule est constitué de deux pièces 6A, 6B superposables pourvues chacune d'une empreinte de façon à délimiter le volume d'un triangle 1 de suspension.

L'empreinte d'une première 6A des deux pièces 6A, 6B constituant le moule comporte au moins une saillie 7 destinée à délimiter un logement 3 pour une articulation 5 élastique clipée. Le plan de joint de la saillie 7 avec la seconde 6B partie du moule est situé au niveau de l'une des extrémités du logement 3 pour l'articulation.

Comme représenté à la figure 2, le logement 3 d'articulation peut être moulé avec une faible dépouille, pour constituer un logement 3 d'articulation de forme sensiblement tronconique. Le bourrelet 4 de clipage est situé au niveau de l'extrémité du tronc de cône de plus faible diamètre. Bien évidemment, la surface périphérique de l'articulation 5 destinée à être clipée dans le logement 3 aura également, dans ce cas, une forme extérieure tronconique, complémentaire de la forme du logement 3 (figure 3).

Cette forme tronconique donnée au logement 3 et à l'articulation 5, permet un meilleur guidage de l'articulation 5 dans son logement 3 lors de son montage.

L'angle A de dépouille du logement 3 d'articulation peut être compris entre 1 et 10 degrés. De préférence, cet angle A de dépouille est compris entre 3 et 5 degrés environ.

Pour donner cette forme tronconique au logement 3 d'articulation, la saillie 7 du moule 6A, 6B aura elle-même une forme sensiblement tronconique.

Le triangle 1 de suspension selon l'invention est de préférence constitué d'aluminium, ou de tout autre matériau équivalent.

On conçoit donc que l'on a un procédé de réalisation d'un triangle de suspension d'une grande simplicité et moins coûteux que ceux de l'art antérieur. En effet, selon l'invention, les logements d'articulation du triangle de suspension peuvent être utilisés "bruts" pour le clipage des articulations élastiques. Cette utilisation des logements 3 d'articulations "bruts", c'est-à-dire peu ou pas usinés, est permise dans le cas où le type de métal utilisé, tel que l'aluminium, permet de garantir les dimensions requises pour les logements 3 après le moulage.

Ainsi, les opérations d'usinage de ces logements 3 d'articulations peuvent être supprimées ou éventuellement réduites à un simple usinage pour garantir un bon état de surface à l'intérieur du logement.

Bien que l'invention ait été décrite en liaison avec des modes de réalisation particuliers, elle comprend tous les équivalents techniques des moyens décrits.

## Revendications

1. Procédé de réalisation d'un triangle (1) de suspension métallique pourvu d'au moins un logement (3) d'articulation (5) élastique emmanchée ou clipée, comportant :
- une étape de moulage d'un triangle dit brut,
**caractérisé en ce que** lors de l'étape de moulage, le plan de joint (J) du moule (6A, 6B) du triangle (1) qui est situé à l'intérieur du ou des logements (3) d'articulation est disposé sensiblement à une des extrémités du logement (3), de façon à former une bavure ou bourrelet (4) au niveau de l'extrémité du logement (3) qui est apte à coopérer par clipage avec l'articulation (5) élastique.

2. Procédé de réalisation d'un triangle (1) de suspension selon la revendication 1, **caractérisé en ce que** le logement (3) d'articulation est moulé avec un angle (A) de dépouille compris entre 1 et 10 degrés, pour constituer un logement (3) sensiblement tronconique.

3. Procédé de réalisation d'un triangle (1) de suspension selon la revendication 2, **caractérisé en ce que** le logement (3) d'articulation présente un angle (A) de dépouille compris entre 3 et 5 degrés.

4. Triangle (1) de suspension obtenu par le procédé selon l'une quelconque des revendications 1 à 3, **caractérisé en ce que** la surface délimitant le ou les logements (3) d'articulations (5) comporte un bourrelet (4) sensiblement circulaire et situé au niveau de l'une des extrémités du logement (3), le bourrelet (4) étant apte à coopérer par clipage avec des moyens de clipage complémentaires formés sur la périphérie d'une articulation (5) élastique.

5. Triangle (1) de suspension selon la revendication 4, **caractérisé en ce que** le ou les logements (3) d'articulation sont sensiblement tronconiques, le bourrelet (4) de clipage étant situé au niveau de l'extrémité du tronc de cône ayant le diamètre le plus faible.

6. Triangle (1) de suspension selon la revendication 4 ou 5, **caractérisé en ce qu'**il est constitué d'aluminium.

7. Moule de mise en oeuvre du procédé selon l'une quelconque des revendications 1 à 3, **caractérisé en ce qu'**il est constitué de deux pièces (6A, 6B) superposables pourvues chacune d'une empreinte de façon à délimiter le volume d'un triangle (1) de suspension, l'empreinte de l'une (6A) des pièces constituant le moule comportant au moins une saillie (7) destinée à former un logement (3) pour une articulation (5), **caractérisé en ce que** le plan de joint (J) de la saillie (7) avec l'autre partie (6B) du moule est situé au niveau de l'une des extrémités du logement (3) pour l'articulation.

8. Moule selon la revendication 7, **caractérisé en ce que** la saillie (7) destinée à délimiter un logement (3) pour l'articulation est sensiblement tronconique.

## Patentansprüche

1. Verfahren zur Herstellung einer metallischen Dreieckslenker-Aufhängung (1), die mit mindestens einer eingesetzten oder eingeklemmten, elastischen Aufnahme (3) für ein Gelenk (5) versehen ist, mit
- einem Schritt zum Formen eines sogenannten Dreieckslenkerrohlings,
**dadurch gekennzeichnet, daß** beim Formungsschritt die Ebene der Verbindung (J) des Formwerkzeugs (6A, 6B) des Dreieckslenkers (1), die sich im Inneren der Gelenkaufnahme(n) (3) befindet, im wesentlichen an einem der Enden der Aufnahme (3) angeordnet ist, so daß ein Grat oder eine Verdickung (4) an dem Ende der Aufnahme (3) gebildet wird, der bzw. die durch Festklemmen mit dem elastischen Gelenk (5) zusammenwirken kann.

2. Verfahren zur Herstellung einer Dreieckslenker-Aufhängung (1) nach Anspruch 1, **dadurch gekennzeichnet, daß** die Gelenkaufnahme (3) mit einem Freiwinkel (A) zwischen 1 und 10 Grad geformt ist, um eine im wesentlichen kegelstumpfförmige Aufnahme (3) zu bilden.

3. Verfahren zur Herstellung einer Dreieckslenker-Aufhängung (1) nach Anspruch 2, **dadurch gekennzeichnet, daß** die Gelenkaufnahme (3) einen Freiwinkel (A) zwischen 3 und 5 Grad aufweist.

4. Dreieckslenker-Aufhängung (1), die durch das Verfahren nach einem der Ansprüche 1 bis 3 erhalten wird, **dadurch gekennzeichnet, daß** die die Aufnahme(n) (3) für die Gelenke (5) begrenzende Fläche eine im wesentlichen kreisförmige Verdickung (4) aufweist, die sich an einem der Enden der Aufnahme (3) befindet, wobei die Verdickung (4) durch Festklemmen mit am Umfang eines elastischen Gelenks (5) ausgebildeten komplementären Klemmitteln zusammenwirken kann.

5. Dreieckslenker-Aufhängung (1) nach Anspruch 4, **dadurch gekennzeichnet, daß** die Gelenkaufnahme(n) (3) im wesentlichen kegelstumpfförmig sind, wobei sich die Klemmverdickung (4) am Ende des Kegelstumpfes mit dem kleinsten Durchmesser befindet.

6. Dreieckslenker-Aufhängung (1) nach Anspruch 4 oder 5, **dadurch gekennzeichnet, daß** sie aus Aluminium besteht.

7. Formwerkzeug zur Durchführung des Verfahrens nach einem der Ansprüche 1 bis 3, **dadurch gekennzeichnet, daß** es aus zwei übereinanderlagerbaren Teilen (6A, 6B) besteht, die jeweils mit einer Kontur versehen sind, um das Volumen einer Dreieckslenker-Aufhängung (1) zu begrenzen, wobei die Kontur eines (6A) der das Formwerkzeug bildenden Teile mindestens einen Vorsprung (7) aufweist, der zur Bildung einer Aufnahme (3) für ein Gelenk (5) bestimmt ist, **dadurch gekennzeichnet, daß** sich die Ebene der Verbindung (J) des Vorsprungs (7) mit dem anderen Teil (6B) des Formwerkzeugs an dem einen der Enden der Aufnahme (3) für das Gelenk befindet.

8. Formwerkzeug nach Anspruch 7, **dadurch gekennzeichnet, daß** der zur Begrenzung einer Aufnahme (3) für das Gelenk bestimmte Vorsprung (7) im wesentlichen kegelstumpfförmig ist.

## Claims

1. Method of producing a metal suspension wishbone (1) provided with at least one housing (3) for an elastic push-fitted or clipped-fastened articulation (5), comprising:
- a stage of casting what is known as a rough-cast wishbone,
**characterized in that** during the casting stage, the parting line (J) of the mould (6A, 6B) of the wishbone (1) which is situated inside the articulation housing or housings (3) is arranged approximately at one of the ends of the housing (3) so as to form flash or a bulge (4) at the end of the housing (3) which is able to collaborate in clip-fastening with the elastic articulation (5).

2. Method of producing a suspension wishbone (1) according to Claim 1, **characterized in that** the articulation housing (3) is cast with an undercut angle (A) of between 1 and 10 degrees to form a roughly frustoconical housing (3).

3. Method of producing a suspension wishbone (1) according to Claim 2, **characterized in that** the articulation housing (3) has an undercut angle (A) of between 3 and 5 degrees.

4. Suspension wishbone (1) obtained by the method according to any one of Claims 1 to 3, **characterized in that** the surface delimiting the housing or housings (3) for articulations (5) comprises a roughly circular bulge (4) situated at one of the ends of the housing (3), the bulge (4) being capable of collaborating in clip-fastening with complementary clip-fastening means formed on the periphery of an elastic articulation (5).

5. Suspension wishbone (1) according to Claim 4, **characterized in that** the articulation housing or housings (3) are roughly frustoconical, the clip-fastening bulge (4) being located at the smaller-diameter end of the cone frustum.

6. Suspension wishbone (1) according to Claim 4 or 5, **characterized in that** it is made of aluminium.

7. Mould for carrying out the method according to any one of Claims 1 to 3, **characterized in that** it consists of two superposable parts (6A, 6B) each equipped with a cavity so as to delimit the volume of a suspension wishbone (1), the cavity of one (6A) of the parts constituting the mould comprising at least one projection (7) intended to form a housing (3) for an articulation (5), **characterized in that** the parting line (J) through the projection (7) to meet the other part (6B) of the mould lies at one of the ends of the housing (3) for the articulation.

8. Mould according to Claim 7, **characterized in that** the projection (7) intended to delimit a housing (3) for the articulation is roughly frustoconical.
